# EUROPÄISCHE PATENTSCHRIFT

(11) **EP 1 826 225 B1**
(45) Veröffentlichungstag und Bekanntmachung des Hinweises auf die Patenterteilung: **16.06.2010**
(21) Anmeldenummer: 07003527.4
(22) Anmeldetag: 21.02.2007
(51) Int. Cl.: C08G 18/08, C08G 18/10, C08G 18/32, C08G 18/42, C08G 18/76, B29C 33/60, C08G 18/65, C08G 18/66, C08L 75/04, C08K 5/20

(54) **Thermoplastisch verarbeitbare Polyurethane, Verfahren zu ihrer Herstellung und ihre Verwendung**
Thermoplastically processable polyurethane, method for its manufacture and its application
Polyuréthane pouvant être traité de manière thermoplastique, son procédé de fabrication et son utilisation

(30) Priorität: 28.02.2006 DE 102006009096
(43) Veröffentlichungstag der Anmeldung: 29.08.2007
(73) Patentinhaber: Bayer MaterialScience AG, 51368 Leverkusen (DE)
(72) Erfinder: Gestermann, Eva, Dr., 51375 Leverkusen (DE); Bräuer, Wolfgang, Dr., 51375 Leverkusen (DE); Wussow, Hans-Georg, Dr., 40597 Düsseldorf (DE); Peerlings, Henricus, Dr., 42699 Solingen (DE); Woeste, Govert, Dr., 40237 Düsseldorf (DE)

(56) Entgegenhaltungen:
- EP-A1- 0 984 039
- DE-A1- 19 940 014
- GB-A- 2 244 714
- US-A- 3 635 877

## Beschreibung

Die Erfindung betrifft bestimmte Wachse enthaltende thermoplastisch verarbeitbare Polyurethane, ein Verfahren zu ihrer Herstellung und ihre Verwendung zur Herstellung von Folien, Beschichtungen und Spritzgießteilen.

Thermoplastische Polyurethan-Elastomere (TPU) sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Zusammenfassende Darstellungen von TPU, ihren Eigenschaften und Anwendungen finden sich in Kunststoffe 68 (1978), S. 819-825 und Kautschuk, Gummi, Kunststoffe 35 (1982), S. 568-584.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, wodurch sich die Eigenschaften des Produkts einstellen lassen. Je nach molaren Verhältnissen von Polyolen zu Kettenverlängerern ergeben sich Produkte in einem weiten Shore-Härte-Bereich. Der Aufbau der thermoplastisch verarbeitbaren Polyurethanelastomeren kann entweder schrittweise (Prepolymer-verfahren) oder durch die gleichzeitige Reaktion aller Komponenten in einer Stufe erfolgen (one-shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Neben Katalysatoren können den TPU-Komponenten auch Hilfsmittel und Zusatzstoffe zugesetzt werden. Als Beispiel seien Wachse genannt, die sowohl bei der technischen Herstellung der TPU als auch bei ihrer Verarbeitung wichtige Aufgaben übernehmen. Das Wachs dient als friktionsminderndes inneres und äußeres Gleitmittel und verbessert so die Fließeigenschaften des TPU. Zusätzlich soll es als Trennmittel das Ankleben des TPU an das umgebende Material (z.B. das Werkzeug) verhindern, und als Dispergator für andere Zusatzstoffe, z.B. Pigmente und Antiblockmittel, wirken.

Im Stand der Technik werden als zu verwendende Wachse z.B. Fettsäureester, wie Stearinsäureester und Montansäureester und deren Metallseifen, daneben Fettsäureamide, wie Stearylamide und Ölsäureamide, oder auch Polyethylenwachse genannt. Eine Übersicht der in Thermoplasten eingesetzten Wachse findet sich in H. Zweifel (Ed.): Plastics Additives Handbook, 5. Ausgabe, Hanser Verlag, München 2001, S. 443ff.

In TPU's werden bisher im wesentlichen Amidwachse verwendet, die eine gute Trennwirkung aufweisen, insbesondere Ethylen-bis-stearylamid. Daneben werden Montanesterwachse eingesetzt, die gute Gleitmittel-Eigenschaften bei geringer Flüchtigkeit zeigen (EP-A 308 683; EP-A 670 339; JP-A 5 163 431). Ein Nachteil von Amidwachsen beim Einsatz in TPU ist aber deren Neigung zur Migration. Diese führt nach einiger Zeit zu Belagbildung auf dem Werkstück, was sowohl zu einer optischen Beeinträchtigung führt, insbesondere bei dünnwandigen Anwendungen wie Folien, als auch unerwünschte Veränderungen oberflächenabhängiger Eigenschaften zur Folge hat. Die Verwendung von Montanesterwachsen ist durch zu niedrige Trübungsgrenzen eingeschränkt. Außerdem zeigen sie selbst bei höherer Konzentration keine ausreichende Trennwirkung.

DE-A 199 40 014 beschreibt aliphatische thermoplastische Polyurethane, die N,N'-Ethylendistearylamid (ACRAWAX^{®} C) enthalten.

In US 3 635 877 werden Zusammensetzungen beschrieben, die hochgefüllte duroplastische Harze enthalten. Diese Harze werden häufig mit Gleitmitteln (wie z.B. ACRAWAX^{®} C, ein Fettsäurebisamid, hergestellt aus Ethylendiamin mit einer Mischung aus Öl- und Stearinsäure) versetzt.

Verbesserungen konnten durch den Einsatz von Ester- und Amidkombinationen (DE-A 19 607 870) und durch den Einsatz von speziellen Wachs-Mischungen von Montansäure- und Fettsäurederivaten (DE-A 19 649 290) erzielt werden. TPU, die diese Wachse enthalten, zeigen zwar eine deutlich geringere Neigung zur Bildung von Oberflächenbelag, jedoch migrieren auch diese Wachse bei bestimmten klimatischen Bedingungen, was nicht akzeptabel ist.

Aufgabe war es daher, ein TPU zur Verfügung zu stellen, welches unabhängig von den klimatischen Bedingungen keinen Oberflächenbelag bildet und gleichzeitig ein sehr gutes Entformungs- und Trennverhalten zeigt.

Diese Aufgabe konnte mit den erfindungsgemäßen TPU gelöst werden.

Gegenstand der Erfindung sind thermoplastisch verarbeitbare Polyurethane, erhältlich aus den Komponenten
A) ein oder mehrere organische Diisocyanate,
B) ein oder mehrere lineare hydroxylterminierte Polyole mit gewichtsmittleren Molekulargewichten von 500 bis 5000,
C) ein oder mehrere Diol-Kettenverlängerer und gegebenenfalls Diaminkettenverlängerer mit Molekulargewichten von 60 bis 490,
   in Gegenwart von
D) gegebenenfalls Katalysatoren
   unter Zugabe von
E) gegebenenfalls Hilfs- und Zusatzstoffen,
wobei das Molverhältnis der NCO-Gruppen in A) zu den gegenüber Isocyanat reaktiven Gruppen in B) und C) 0,9:1 bis 1,2:1 beträgt,
dadurch gekennzeichnet, dass das Polyurethan 0,02 bis 2 Gew.-%, bezogen auf das Gesamtprodukt, einer Mischung F) aus den Umsetzungsprodukten von Alkylendiaminen, bevorzugt Ethylendiamin, mit a) einer oder mehreren linearen Fettsäuren, vorzugsweise Stearin- und/oder Palmitinsäure oder technischer Stearinsäure und von Alkylendiaminen, bevorzugt Ethylendiamin, mit b) 12-Hydroxystearinsäure und/oder aus den Umsetzungsprodukten von Alkylendiaminen, bevorzugt Ethylendiamin, mit c) 12-Hydroxystearinsäure und einer oder mehreren linearen Fettsäuren, vorzugsweise Stearin- und/oder Palmitinsäure oder technische Stearinsäure, enthält.

Die Mischung F enthält die Umsetzungsprodukte von Alkylendiamin mit a) und b) und/oder c) vorzugsweise im Verhältnis 1-95 Gew.-% (bevorzugt 1-85 Gew.-%, besonders bevorzugt 5-75 Gew.-%) zu 1-95 Gew.-% (bevorzugt 1-85 Gew.-%, besonders bevorzugt 5-75 Gew.-%) zu 0-50 Gew.-% (bevorzugt 0-40 Gew.-%) bezogen auf das Gesamtgewicht der Mischung F, wobei die Summe der Umsetzungsprodukte 100 Gew.-% ergibt.

Technische Stearinsäure enthält 20 bis 50 Gew.-% Palmitinsäure und 50 - 80 Gew.-% Stearinsäure.

Als organische Diisocyanate A) kommen beispielsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendüsocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandüsocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandüsocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Als Komponente B) werden lineare hydroxylterminierte Polyole mit einem Molekulargewicht von 500 bis 5000 eingesetzt. Produktionsbedingt enthalten diese oft kleine Mengen an nichtlinearen Verbindungen. Häufig spricht man daher auch von "im Wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyether-Diole besitzen Molekulargewichte von 500 bis 5000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyester-Diole besitzen Molekulargewichte von 500 bis 5000 und können einzeln oder in Form von Mischungen untereinander zur Anwendung kommen.

Als Kettenverlängerungsmittel C) werden Diole mit einem Molekulargewicht von 60 bis 490 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon und ethoxylierte Bisphenole. Das Kettenverlängerungsmittel C) kann auch kleinere Anteile an Diaminen enthalten. Dazu gehören (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und 3,5-Diethyl-2,6-toluylen-diamin und primäre mono-, di-, tri- oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Erfindungsgemäß enthalten die TPU als besonders bevorzugteWachs-Komponente F) 0,02 bis 2 Gew.-%, bevorzugt 0,05 bis 1,2 Gew.-% , bezogen auf das Gesamt-TPU, einer Mischung aus den Umsetzungsprodukten von Ethylendiamin mit a) technischer Stearinsäure (enthaltend 20 - 50 Gew.-% Palmitinsäure und 50 - 80 Gew.-% Stearinsäure) sowie b) 12-Hydroxystearinsäure im molaren Verhältnis a:b von 0,05:0,95 bis 0,95:0,05, vorzugsweise von 0,25:0,75 bis 0,75:0,25.

Die Umsetzung kann entsprechend üblicher Amidierungs-Verfahren der organischen Chemie erfolgen (vgl. Houben und Weyl, Methoden der organischen Chemie, 4. Auflage, Thieme Verlag 1952, 8, Seiten 647-671). Die Säuren a) und b) können dabei gemeinsam mit einer äquimolaren Menge an Ethylendiamin umgesetzt werden, oder man setzt sie einzeln um und mischt anschließend die entstandenen Amide. Je nach Herstellungsverfahren ergeben sich Mischungen, die folgende Umsetzungsprodukte in unterschiedlichen Anteilen enthalten:
- C 16-EDA-C 16: Ethylen-bis-palmitylamid
- C 16-EDA-C 18: Ethylen-palmityl-stearylamid
- C16-EDA-C18OH: Ethylen-palmityl-hydroxystearylamid
- C 18-EDA-C 18: Ethylen-bis-stearylamid
- C 18-EDA-C 180H: Ethylen-stearyl-hydroxystearylamid
- C180H-EDA-C180H: Ethylen-bis-hydroxystearylamid

Geeignete Katalysatoren D) für die TPU-Herstellung sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Neben den TPU-Komponenten, den Wachsen und den Katalysatoren können auch andere Hilfsmittel und Zusatzstoffe E) zugesetzt werden. Genannt seien beispielsweise Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Weitere Zusätze, die in das TPU eingearbeitet werden können, sind Thermoplaste, beispielsweise Polycarbonate und Acrylnitril-Butadien-Styrol-Terpolymerisate, insbesondere ABS. Ebenfalls können andere Elastomere wie Kautschuk, Ethylen-Vinylacetatcopolymerisate, Styrol-Butadiencopolymerisate sowie andere TPU verwendet werden. Weiterhin zur Einarbeitung geeignet sind handelsübliche Weichmacher wie Phosphate, Phthalate, Adipate, Sebacate und Alkylsulfonsäureester.

Ein weiterer Gegenstand der Erfindung ist ein Verfahren zur Herstellung der erfindungsgemäßen TPU. Diese können kontinuierlich im sogenannten Extruderverfahren, z.B. in einem Mehrwellenextruder, hergestellt werden. Die Dosierung der TPU-Komponenten A), B) und C) kann gleichzeitig, d.h. im one-shot-Verfahren, oder nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

Die Wachse F) können kontinuierlich zu der TPU-Reaktion in den Extruder, bevorzugt in das erste Extrudergehäuse, dosiert werden. Die Dosierung erfolgt entweder bei Raumtemperatur im festen Aggregatzustand oder in flüssiger Form bei 70 bis 120°C. Es ist aber auch möglich, die Wachse in das vorab hergestellte und in einem Extruder wieder aufgeschmolzene TPU zu dosieren und zu compoundieren. Sie können in einer weiteren Variante vor der Reaktion in die Polyolkomponente, bevorzugt bei Temperaturen von 70 bis 120°C, homogen eingemischt und mit ihr zusammen zu den übrigen Komponenten dosiert werden.

Die so erhaltenen TPU-Produkte besitzen gute mechanische und elastische Eigenschaften. Zusätzlich haben sie ein hervorragendes Verarbeitungsverhalten.

Bei der Verarbeitung zu Spritzgießartikeln macht sich das hervorragende Trennverhalten der erfindungsgemäßen TPU in einer guten Entformbarkeit bemerkbar. Die geringe Migrationsneigung führt bei unterschiedlichsten Lagerbedingungen auch nach langer Lagerzeit zu keiner Belagbildung.

Aus den TPU lassen sich aus der Schmelze Filme und Folien mit großer Homogenität herstellen. Diese Filme und Folien haben aufgrund ihrer geringen Klebeneigung ein sehr gutes Trennverhalten. Da keine Migration auftritt, werden das optische Bild und die Oberflächeneigenschaften auch bei langer Lagerzeit nicht beeinträchtigt.

Die TPU können auch als Beschichtungen verwendet werden.

Die Erfindung soll anhand der nachfolgenden Beispiele näher erläutert werden.

### Beispiele 1 bis 6

### TPU-Rezeptur

| | |
|---|---|
| Poly-butandiol-1,4-adipat (Molekulargewicht ca. 2200): | 100 Gew.-Teile |
| Butandiol: | 11 Gew.-Teile |
| Diphenylmethandiisocyanat (MDI-flüssig, 50°C): | 42 Gew.-Teile |
| Titan-acetylacetonat: | 7,5 ppm |

### TPU-Herstellung

In einer kontinuierlichen TPU-Reaktion wurde in einem Rohrmischer/Extruder (Extruder ZSK 53, Fa. Werner/Pfleiderer) nach dem bekannten Prepolymerverfahren, wie es in EP-A 571 830 und EP-A 571 828 beschrieben ist, das TPU hergestellt. Die Gehäusetemperaturen der 13 Gehäuse lagen bei 100°C bis 220°C. Die Drehzahl der Schnecke war auf 290 U/min eingestellt. Die Gesamtdosierung lag bei 75 kg/h. Das TPU wurde als Schmelzestrang extrudiert, in Wasser abgekühlt und granuliert. '

Die Wachse bzw. die Mischungen wurden nach Maßgabe der Tabellen 1 und 2 in der oben geschilderten kontinuierlichen TPU-Herstellung (ZSK-Gehäuse 1) zudosiert.

### Beispiel 7

### TPU-Herstellung

In einem Reaktionsgefäß wurden 100 Gew.-Teile Poly-butandiol-1,4-adipat (Molekulargewicht ca. 2200) mit einer Temperatur von 180°C, in dem die Wachsmischung gelöst war, und 42 Gew.-Teile 60°C warmes 4,4'-Diphenylmethandiisocyanat (MDI) unter Rühren zu einem Umsatz von > 90 mol-%, bezogen auf das Polyol, gebracht.

Anschließend wurden 11 Gew.-Teile Butandiol-1,4 intensiv eingemischt, und das Reaktionsgemisch wurde nach ca. 15 sec auf ein beschichtetes Blech gegossen und bei 120°C 30 Minuten nachgetempert. Die Gießplatten wurden geschnitten und granuliert.

### Herstellung von Folien 8 bis 10

Die TPU-Granulate wurden in einem Einwellen-Extruder (Einwellen-Extruder 30/25D Plasticorder PL 2000-6, Fa.Brabender) aufgeschmolzen (Dosierung 3 kg/h; 185-205°C) und durch einen Folienblaskopf zu einer Schlauchfolie extrudiert.

### Herstellung von Spritzgießplatten 1 bis 7

Die TPU-Granulate wurden in einer Spritzgießmaschine (Spritzgießmaschine D 60, 32er Schnecke, Mannesmann AG) aufgeschmolzen (Massetemperatur ca. 225°C) und zu Platten geformt (Formtemperatur 40°C ; Plattengröße : 125x45x2 mm).

Die wichtigsten Eigenschaften der so hergestellten TPU-Formkörper sind in den Tabellen 1 und 2 angegeben.

**Tabelle 1: Spritzgießplatten**

| Platte | TPU | Wachs Gew.-% | Trennwirkung | Optische Beurteilung der Belagsbildung Abstufung: sehr wenig -wenig - mäßig - stark - sehr stark | | |
|---|---|---|---|---|---|---|
| | | | | nach 2 Wochen bei 60°C | nach 2 Wochen bei 80°C | nach 6 Monaten bei RT |
| 1 * | 1 | 1 | sehr gut | wenig | sehr stark | stark |
| | | 0,4 | | | | |
| 2* | 2 | 1 | sehr gut | stark | sehr stark | stark |
| | | 0,7 | | | | |
| 3* | 3 | 2 | sehr gut | stark | wenig | stark |
| | | 0,3 | | | | |
| 4 | 4 | 3 | sehr gut | sehr wenig | wenig | wenig |
| | | 0,4 | | | | |
| 5 | 5 | 3 | sehr | sehr wenig | wenig | wenig |
| | | 0,7 | wenig | | | |
| 6* | 6 | 4 | gut | stark | stark | wenig |
| | | 0.4 | | | | |
| 7 | 7 | 3 | sehr gut | sehr wenig | wenig | wenig |
| | | 0.7 | | | | |

| | | | | | | |
|---|---|---|---|---|---|---|
| * Vergleichsversuche | | | | | | |

- Wachs 1: = Loxamid^{®} 3324 (Ethylen-bis-stearylamid)
- Wachs 2: = Abril^{®} Paradigm Wax 77 (Stearylsäureamidethylstearat)
- Wachs 3: = Wachs-Mischung enthaltend 7 % Ethylen-bis-palmitylamid, 25 % Ethylenpalmityl-stearylamid, 13 % Ethylen-palmityl-hydroxystearylamid, 24 % Ethylenbis-stearylamid, 24 % Ethylen-stearyl-hydroxystearylamid und 7 % Ethylen-bis-hydroxystearylamid; erfindungsgemäß
- Wachs 4: = 1:1 Mischung aus Ethylen-bis-stearylamid und Licowachs OP (Butylmontanat, teilweise mit Ca verseift)

**Tabelle 2: Folien**

| Folie | TPU | Wachs Gew.-% | Folienbeurteilung | | | | |
|---|---|---|---|---|---|---|---|
| | | | | | Optische Beurteilung der Belagsbildung | | |
| | | | Klebeverhalten | Homogenität | Belag nach 2 Wochen bei 60°C | Belag nach 2 Wochen bei 80°C | Belag nach 2 Monaten bei RT |
| 8* | 1 | 1 | sehr gut | sehr gut | wenig | stark | stark |
| | | 0,4 | | | | | |
| 9 | 4 | 3 | gut | sehr gut | sehr wenig | sehr wenig | wenig |
| | | 0,4 | | | | | |
| 10 | 5 | 3 | gut | sehr gut | sehr wenig | sehr wenig | wenig |
| | | 0,7 | | | | | |

| | | | | | | | |
|---|---|---|---|---|---|---|---|
| *Vergleich | | | | | | | |

Die Ergebnisse zeigen eindeutig, dass nur bei Einsatz der Wachs-Mischung 3 (gemäß Erfindung) sowohl nach Lagerung bei Raumtemperatur als auch bei 60°C und bei 80°C so gut wie kein Oberflächenbelag zu finden ist. Sowohl an den Spritzgießteilen als auch an den Folien können die guten Eigenschaften der erfindungsgemäßen TPUs beobachtet werden.

## Patentansprüche

1. Thermoplastisch verarbeitbares Polyurethan erhältlich aus den Komponenten
A) ein oder mehrere organische Diisocyanate,
B) ein oder mehrere lineare hydroxylterminierte Polyole mit gewichtsmittleren Molekulargewichten von 500 bis 5000,
C) ein oder mehrere Diol-Kettenverlängerer und gegebenenfalls Diaminkettenverlängerer mit Molekulargewichten von 60 bis 490,
in Gegenwart von
D) gegebenenfalls Katalysatoren
unter Zugabe von
E) gegebenenfalls Hilfs- und Zusatzstoffen,
wobei das Molverhältnis der NCO-Gruppen in A) zu den gegenüber Isocyanat reaktiven Gruppen in B) und C) 0,9:1 bis 1,2:1 beträgt, **dadurch gekennzeichnet, dass** das Polyurethan 0,02 bis 2 Gew.-%, bezogen auf das Gesamtprodukt, einer Mischung F) aus den Umsetzungsprodukten von Alkylendiaminen mit a) einer oder mehreren linearen Fettsäuren und von Alkylendiaminen mit b) 12-Hydroxystearinsäure und/oder aus den Umsetzungsprodukten von Alkylendiaminen mit c) 12-Hydroxystearinsäure und einer oder mehreren linearen Fettsäuren enthält.

2. Ein thermoplastisch verarbeitbares Polyurethan gemäß Anspruch 1, **dadurch gekennzeichnet, dass** die Komponente A)
4,4'-Diphenylmethandiisocyanat, Isophorondiisocyanat, 1,6-Hexamethylendiisocyanat, 1,5-Naphthylendiisocyanat oder 4,4'-Dicyclohexyldiisocyanat oder ein Gemisch davon ist,
die Komponente B)
ein lineares Polyester-Diol, Polyether-Diol, Polycarbonatdiol oder ein Gemisch davon daraus ist
und die Komponente C)
Ethylenglykol, Butandiol, Hexandiol, 1,4-Di-(betahydroxyethyl)-hydrochinon, 1,4-Di-(betahydroxyethyl)-bisphenol A oder ein Gemisch daraus ist.

3. Verfahren zur kontinuierlichen Herstellung eines thermoplastisch verarbeitbaren Polyurethans gemäß Anspruch 1, wobei die Mischung F) zusammen mit den Komponenten A), B), C) und gegebenenfalls D) und E) in einen Extruder dosiert wird.

4. Verfahren zur kontinuierlichen Herstellung eines thermoplastisch verarbeitbaren Polyurethans gemäß Anspruch 3, wobei die Mischung F) vorab in das Polyol B) eingemischt wird und dieses Mischprodukt zusammen mit den Komponenten A), C) und gegebenenfalls D) und E) in den Extruder dosiert wird.

5. Verwendung des thermoplastisch verarbeitbaren Polyurethans gemäß Anspruch 1 zur Herstellung von Folien, Beschichtungen und Spritzgießteilen.

6. Folie aus einem thermoplastisch verarbeitbaren Polyurethan gemäß Anspruch 1.

7. Spritzgießteil aus einem thermoplastisch verarbeitbaren Polyurethan gemäß Anspruch 1.

8. Beschichtung aus einem thermoplastisch verarbeitbaren Polyurethan gemäß Anspruch 1.

## Claims

1. Melt-processable polyurethane obtainable from the following components:
A) one or more organic diisocyanates,
B) one or more linear hydroxyl-terminated polyols with weight-average molecular weights of 500 to 5000,
C) one or more diol chain extenders and optionally diamine chain extenders with molecular weights of 60 to 490,
in the presence of
D) optionally catalysts
with the addition of
E) optionally auxiliary substances and additives,
wherein the molar ratio of the NCO groups in A) to the isocyanate-reactive groups in B) and C) is 0.9:1 to 1.2:1, **characterised in that** the polyurethane contains 0.02 to 2 wt.%, based on the total product, of a mixture F) of the reaction products of alkylene diamines with a) one or more linear fatty acids and of alkylene diamines with b) 12-hydroxystearic acid and/or of the reaction products of alkylene diamines with c) 12-hydroxystearic acid and one or more linear fatty acids.

2. A melt-processable polyurethane according to claim 1, **characterised in that** the component A) is
4,4'-diphenylmethane diisocyanate, isophorone diisocyanate, 1,6-hexamethylene diisocyanate, 1,5-naphthylene diisocyanate or 4,4'-dicyclohexyl diisocyanate or a mixture thereof,
component B) is
a linear polyester diol, polyether diol, polycarbonate diol or a mixture thereof
and component C) is
ethylene glycol, butanediol, hexanediol, 1,4-di(betahydroxyethyl)hydroquinone, 1,4-di(betahydroxyethyl)bisphenol A or a mixture thereof.

3. Process for the continuous production of a melt-processable polyurethane according to claim 1,
wherein the mixture F) is metered into an extruder together with the components A), B), C) and optionally D) and E).

4. Process for the continuous production of a melt-processable polyurethane according to claim 3,
wherein the mixture F) is mixed into the polyol B) in advance and this mixed product is metered into the extruder together with the components A), C) and optionally D) and E).

5. Use of the melt-processable polyurethane according to claim 1 for the production of films, coatings and injection mouldings.

6. Film made from a melt-processable polyurethane according to claim 1.

7. Injection moulding made from a melt-processable polyurethane according to claim 1.

8. Coating made from a melt-processable polyurethane according to claim 1.

## Revendications

1. Polyuréthane thermoplastiquement façonnable obtenu à partir des constituants :
A) un ou plusieurs diisocyanates organiques,
B) un ou plusieurs polyols linéaires hydroxyle-terminés avec des poids moléculaires moyens en poids de 500 à 5 000,
C) un ou plusieurs agents d'allongement de chaîne de diols et éventuellement d'agents d'allongement de chaîne de diamines avec des poids moléculaires de 60 à 490,
en présence
D) éventuellement de catalyseurs
avec l'addition
E) éventuellement d'auxiliaires et d'additifs,
le rapport molaire des groupes NCO dans A) par rapport aux groupes réactifs avec les isocyanates dans B) et C) étant de 0,9:1 à 1,2:1, **caractérisé en ce que** le polyuréthane contient de 0,02 à 2 % en poids, rapporté au produit global, d'un mélange F) constitué des produits de réaction d'alkylènediamines avec a) un ou plusieurs acides gras linéaires et d'alkylènediamines avec b) l'acide 12-hydroxystéarique et/ou constitué des produits de réaction d'alkylènediamines avec c) l'acide 12-hydroxystéarique ou un ou plusieurs acides gras linéaires.

2. Polyuréthane thermoplastiquement transformable selon la revendication 1, **caractérisé en ce que** le constituant A) est
le diisocyanate de 4,4'-diphénylméthane, le diisocyanate d'isophorone, le diisocyanate de 1,6-hexaméthylène, le diisocyanate de 1,5-naphtylène ou le diisocyanate de 4,4'-dicyclohexyle ou un mélange de ceux-ci,
le constituant B) est
un polyester-diol, polyéther-diol, polycarbonate-diol linéaire ou un mélange de ceux-ci,
et le constituant C) est
l'éthylèneglycol, le butanediol, l'hexanediol, la 1,4-di-(bétahydroxyéthyl)-hydroquinone, le 1,4-di-(bétahydroxyéthyl)-bisphénol A ou un mélange de ceux-ci.

3. Procédé pour la préparation continue d'un polyuréthane thermoplastiquement façonnable selon la revendication 1, dans lequel on dose le mélange F) avec les constituants A), B), C) et éventuellement D) et E) dans une extrudeuse.

4. Procédé pour la préparation continue d'un polyuréthane thermoplastiquement transformable selon la revendication 3, dans lequel on mélange préalablement le mélange F) dans le polyol B) et on dose ce produit de mélange avec les constituants A), C) et éventuellement D) et E) dans l'extrudeuse.

5. Utilisation du polyuréthane thermoplastiquement transformable selon la revendication 1 pour la préparation de feuilles, de revêtements et de pièces moulées par injection.

6. Feuille constituée d'un polyuréthane thermoplastiquement transformable selon la revendication 1.

7. Pièce moulée par injection constituée d'un polyuréthane thermoplastiquement transformable selon la revendication 1.

8. Revêtement constitué d'un polyuréthane thermoplastiquement transformable selon la revendication 1.
